# EUROPEAN PATENT APPLICATION

(11) **EP 2 343 656 A1**
(43) Date of publication of application: **13.07.2011**
(21) Application number: 09179321.6
(22) Date of filing: 15.12.2009
(51) Int. Cl.: G06F 13/362

(54) **Network scheduling method, computer program product and network-on-chip**

(71) Applicant: NXP B.V., 5656 AG Eindhoven (NL)
(72) Inventor: Pontius, Tim, Redhill, Surrey RH1 1DL (GB)
(74) Representative: Williamson, Paul Lewis

(57) **Abstract**

Disclosed is a method (200) of scheduling communications over a network (300) comprising a plurality of connections to a shared resource (340), comprising: defining a communication schedule (100) comprising a total number of time slots (110) for granting a connection periodical access to the shared resource; and, for each connection: assigning a first available time slot (110) in the communication schedule; and assigning a second available time slot (110) in the communication schedule having a minimal delay with respect to the first time slot (110), said minimal delay being at least the expected combined latency of the network (300) and the shared resource (340) for responding to a request for said shared resource by the connection. A computer program product and network-on-chip (300) are also disclosed.

## Description

### FIELD OF THE INVENTION

The present invention relates to a method of scheduling communications over a network comprising a plurality of connections to a shared resource.

The present invention further relates to a computer program product implementing such a method.

The present invention yet further relates to a network-on-chip comprising a communications schedule of said method.

### BACKGROUND OF THE INVENTION

Systems on silicon show a continuous increase in complexity due to the ever increasing need for implementing new features and improvements of existing functions. This is enabled by the increasing density with which components can be integrated on an integrated circuit. At the same time the clock speed at which circuits are operated tends to increase too. The higher clock speed in combination with the increased density of components has reduced the area which can operate synchronously within the same clock domain. This has created the need for a modular approach. According to such an approach a processing system comprises a plurality of relatively independent, complex modules.

In conventional processing systems the modules usually communicate to each other via a bus. As the number of modules increases however, this way of communication is no longer practical for the following reasons. A large number of modules represent a high bus load. Further the bus represents a communication bottleneck as it enables only one module to send data to the bus.

Networks on chip (NoC) have received considerable attention recently as a solution to the interconnection problem in highly-complex chips. The reason is twofold. First, NoCs help resolve the electrical problems in new deep-submicron technologies, as they structure and manage global wires. At the same time the NoC concept share wires, allows a reduction of the number of wires and increases the utilization of wires. NoCs can also be energy efficient and reliable and are scalable compared to buses. Second, NoCs also decouple computation from communication, which is essential in managing the design of billion-transistor chips.

In a Network-on-Chip (NoC) implementation, there are many different ways to arbitrate access to shared resources. One such way is to implement a Time Division Multiple Access (TDMA) scheduling algorithm that grants access to requestors at predetermined times. This is only one of several different scheduling algorithms that can be used. The TDMA approach offers certain advantages, but also brings some challenges. One such challenge is latency. With most implementations of the TDMA approach, arbiters are not work-conserving, i.e. do not ensure 100% utilization of the network, such that latency tends to be higher compared to priority based arbitration schemes that are work-conserving.

With TDMA scheduling, a requestor is allowed access to shared resources at times that are commonly called "slots". The TDMA algorithm is commonly thought of as a rotating wheel comprising a plurality of such time slots, with a pointer to a time slot being used to indicate which requestor is granted access at any given time. In most implementations the pointer is advanced or the wheel is turned at fixed intervals in time, thereby progressing access to the resource to the next time slot. For this reason, this interval may be called the slot time and is typically at least one clock cycle long, although usually, each slot time comprises multiple clock cycles.

The slot pointer is typically implemented by a counter that increments at fixed intervals (the slot time). When the value in this counter is equal to a value that is assigned to the connection initiator, that initiator is granted access. It is said that the current slot belongs to that initiator. It is possible for one initiator to have multiple assigned slots. It takes some finite, but known, amount of time to make one complete pass around the TDMA wheel. This is typically the product of the number of time slots on the wheel and the duration of a single time slot.

The bandwidth that may be required by each initiator in that period of time determines how many slots that initiator will be assigned. For example, if a TDMA wheel consisting of 1024 slots (utilizing a 10-bit pointer) is used for arbitration, then a very high-bandwidth initiator might need 256 slots (1/4 of the total bandwidth available), while a moderate-bandwidth initiator might need only 64 slots (1/16 of the total bandwidth), and a very low-bandwidth initiator might need only 1 slot (1/1024 of the total bandwidth).

In order to minimize latency, it is standard practice to evenly distribute all of the slots for a single initiator around the wheel. That is, for the high-bandwidth initiator that needs 256 slots, a non-optimal solution would be to assign the slots numbered 0-255, and leave slots 256-1023 for other initiators. This would mean that if an access request of the high-bandwidth initiator would arrive at slot 256, the wheel would have to advance 768 slot periods before the request could be serviced. For this reason, slots are typically assigned at evenly distributed intervals. For example, slots 0, 4, 8, 12, 16 ... 1020 might be assigned to the high-bandwidth initiator. In that way, the longest time that this initiator would ever have to wait to gain access to the shared resource is 4 slot periods.

A commonly used method for assigning the slots to potential initiators is to start with the connections (initiators) that require the most slots, assigning those first. Then other connections are scheduled in order from those requiring more slots to those requiring the fewest slots. Hence, for the above example, the 256-slot initiator would be scheduled first.

Typically, this method searches for an open slot by starting at some initial slot, typically slot 0. If that slot is unavailable (i.e. already taken), then its neighboring slots, i.e. the slots after and before the initial slot are each considered. If both of these are unavailable, then the slots two-after and two-before the initial slot are considered, and so on.

In a system that has one initiator using 1/4 of all slots, two each using 1/8 of all slots, one using 1/16, and other initiators using fewer slots, this method results in the following assignments:
- Initiator 1, using 1/4 of all slots gets slots 0, 4, 8, 12, 16 ... 1020. (slot 0 available: yes)
- Initiator 2, using 1/8 of all slots gets slots 1, 9, 17, 25 ... 1017. (slot 0 available: no, slot 1 available: yes)
- Initiator 3, using 1/8 of all slots gets slots 7, 15, 23, 31 ... 1023. (slot 0 available: no, slot 1 available: no, slot 1023 available: yes)
- Initiator 4, using 1/16 of all slots gets slots 2, 18, 34, 50 ... 1010. (slot 0 available: no, slot 1 available: no, slot 1023 available: no, slot 2 available: yes)

The expressions in between brackets indicate the initial slot availability checks performed for each initiator.

By assigning slots in powers of two, and starting with the initiators that use the most slots and working toward those that use fewer slots, it is guaranteed that when an open slot is found, all of the subsequent slots at equal intervals will also be available. Second, by searching at offset 0, then +1, then -1, then +2, then -2, and so on guarantees that the identified first available slot is as close as possible to the initially requested slot. However, this method does not take into consideration that for certain types of communications, both request packets and response packets must be scheduled through the network.

Request packets are those packets that begin a read or write transaction. In the case of a write transaction, the write data may be incorporated into the request packet(s). Response packets are those packets generated in response to a request. For a read requests, one or more response packets send read data back to the initiator of the communication. For a write request, typically one response packet is used to send notification that the write has completed, with some kind of success or failure status.

In the aforementioned method, the same kind of algorithm is employed for request packets and response packets. This often leads to the same slots being assigned for traffic in both directions. For a high-bandwidth device, this is not unreasonable, as that device only has to wait a small number of slots to gain access to shared network resources. However, for a very low bandwidth device, this can cause unacceptable delays to the completion of a communication because it is often impossible for the NoC to complete the communication within a single time slot.

Consequently, in such a case, when using the same algorithm for scheduling both request and response packets, resulting in the same slots assigned for both types of packets, the initiator will have to wait to receive the response packet for a time that is will be close to the worst-case scenario.

For example, assume a device (initiator) that has been assigned a single slot on the slot wheel, and both request and response packets are assigned to the same slot of a 1024-slot wheel, e.g. slot 126. If a request is pending when slot 126 arrives, the request will be sent from the initiator toward the target. This will arrive sometime after slot 126, possibly as soon as slot 127, but more likely in slots 128, 129, 130, or 131, depending on the size and design of the network. For this example, it is assumed that the request arrives at the target at a time equivalent to slot 130. If the target produces a response after only one slot time, that response will be ready to send in slot 131. However, the target will be forced to wait until slot 126 arrives again, i.e. a wait for 1019 slot times - nearly the worst case waiting time.

Obviously, this problem is most apparent for a device that is allocated only one slot. However, even devices that have been assigned two or more slots on the TDMA wheel can suffer from this problem, albeit with corresponding lower severity. However, as such devices may require a higher bandwidth in order to meet user requirements, the problem may be perceived as equally unacceptable.

### SUMMARY OF THE INVENTION

The present invention seeks to provide a method of scheduling communications over a network comprising a plurality of connections to a shared resource in which the aforementioned delay problems are at least reduced.

The present invention further seeks to provide a computer program product implementing this method.

The present invention yet further seeks to provide a network-on-chip benefiting from this method.

In accordance with an aspect of the present invention, there is provided a method of scheduling communications over a network comprising a plurality of connections to a shared resource, comprising defining a communication schedule comprising a total number of time slots for granting a connection periodical access to the shared resource; and, for each connection, assigning a first available time slot in the communication schedule; and assigning a second available time slot in the communication schedule having a minimal delay with respect to the first time slot, said minimal delay being at least the expected combined latency of the network and the shared resource for responding to a request for said shared resource by the connection.

By delaying the return communication from the shared resource to an initiator of the communication by the combined latency, i.e. the sum of the latencies of the network and the shared resource, the return communication is guaranteed to be as close as possible to the theoretical minimum delay between these communications. This is particularly advantageous when the first time slot is assigned to an access request to the shared resource from the selected connection and the second time slot is assigned to a response from the shared resource to said request.

In an embodiment, each connection, i.e. initiator, has a specified bandwidth requirement, the method further comprising determining the sum of the specified bandwidth requirements of said connections dividing the number of time slots by said sum to determine the number of time slots available per unit bandwidth in the communication schedule; selecting the connection having the highest bandwidth requirement; determining the number of time slots available to said connection by multiplying the number of time slots available per unit bandwidth with the bandwidth requirement of said connection; repeating the steps of assigning the first available time slot and the second available time slot for said selected connection until all time slots available to said connection have been assigned.

Preferably, the bandwidth requirements of the initiators are expressed as a fraction of the total available time slots that is a power of 2 so that the principles of the previously discussed known method may be applied. This leads to subsequently assigned first available time slots being spaced apart by the total number of time slots divided by the number of time slots available to said connection. In other words, the time slots are (approximately) spaced in the schedule in an equidistant manner.

The steps of selecting the connection having the next highest bandwidth requirement determining the number of time slots available to said connection by multiplying the number of time slots available per unit bandwidth with the bandwidth requirement of said connection; and repeating the steps of assigning the first available time slot and the second available time slot for said selected connection may be repeated until available time slots have been assigned to all connections.

In an embodiment, each connection comprises a first channel for communicating data to the shared resource and a second channel for receiving data from the shared resource; the communication schedule comprises a first time slot table for the first channels and a second time slot table for the second channels; the step of assigning the first available time slot comprises assigning the first available time slot to the first time slot table; and the step of assigning the second available time slot comprises assigning the second available time slot to the second time slot table. For instance, each of said first channels may comprise at least one network interface comprising the first time slot table; and each of said second channels comprises at least one network interface comprising the second time slot table.

According to another aspect of the present invention, there is provided a computer program product for, if executed on a processor of a computer, implementing the steps of the method of the present invention. Such a computer program product may be made available of a computer-readable medium such as a CD-ROM, DVD, memory stick, a network-accessible storage device, such as a remote server accessible through the Internet and so on.

According to yet another aspect of the present invention, there is provided a network-on-chip comprising a plurality of connections to a shared resource, the network-on-chip further comprising a first communication schedule for the shared resource, said first communication schedule comprising a plurality of time slots assigned to the respective connections, wherein for said connections, the delay between a first assigned time slot and a second assigned time slot is a minimal delay, said minimal delay being at least the expected combined latency of the network and the shared resource for responding to a request for said shared resource by the connection. This TDMA NoC benefits from implementing a schedule produced by the method of the present invention, thereby minimizing the delays to communications over the network.

The network-on-chip may further comprise a scheduler comprising a plurality of communication schedules including the first communication schedule, said scheduler being adapted to program the network with one of said communication schedules in response to a control signal, such as a control signal generated by the user of the network-on-chip. Hence, in this embodiment, the NoC can switch between use cases each having a communication schedule produced by the method of the present invention.

### BRIEF DESCRIPTION OF THE EMBODIMENTS

Embodiments of the invention are described in more detail and by way of non-limiting examples with reference to the accompanying drawings, wherein:
FIG. 1 schematically depicts a communication schedule;
FIG. 2 schematically depicts a flow chart of an embodiment of the method of the present invention; and
FIG. 3 schematically depicts a NoC in accordance with an embodiment of the present invention.

### DETAILED DESCRIPTION OF THE DRAWINGS

It should be understood that the Figures are merely schematic and are not drawn to scale. It should also be understood that the same reference numerals are used throughout the Figures to indicate the same or similar parts.

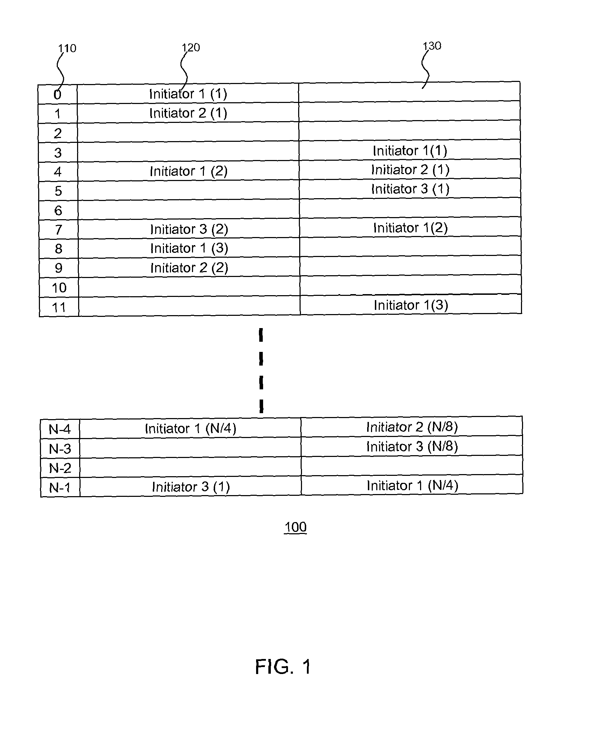

FIG. 1 shows an communication schedule 100 for a shared resource in a NoC, which has N time slots 110 with N being an integer that preferably is a power of 2, a first time slot table 120 for request traffic to the shared resource and a second time slot table 130 for response traffic from the shared resource to an initiator of a request. The time slot tables 120 and 130 can be seen as TDMA wheels when connecting its entry N to entry 1. Each time slot table may refer to a separate communication channel of the NoC, in particular a channel for communication to the shared resource and a channel for communication from the shared resource respectively.

In the context of the present application, the communication between an initiator and a shared resource will be referred to as a connection. Hence, the entries in the tables 120 and 130 will be assigned to such connections, which means that during such an entry, the shared resource will be allowed to communicate with the initiator in case of a pending access request from the initiator.

As previously explained, in the prior art scheduling method, connections are assigned to both tables 120 and 130 using the same algorithm, such that for instance for an initiator 1, both request and response communications were assigned the same time slots. Consequently, if a delay between the sending response caused by the combined network delay and shared resource latency resulted in the response packet being ready for sending to the initiator only after expiry of the allocated time slot, the initiator had to wait its next turn in the response slot table 130 for completion of the communication with the shared resource, which can cause unacceptably long delays.

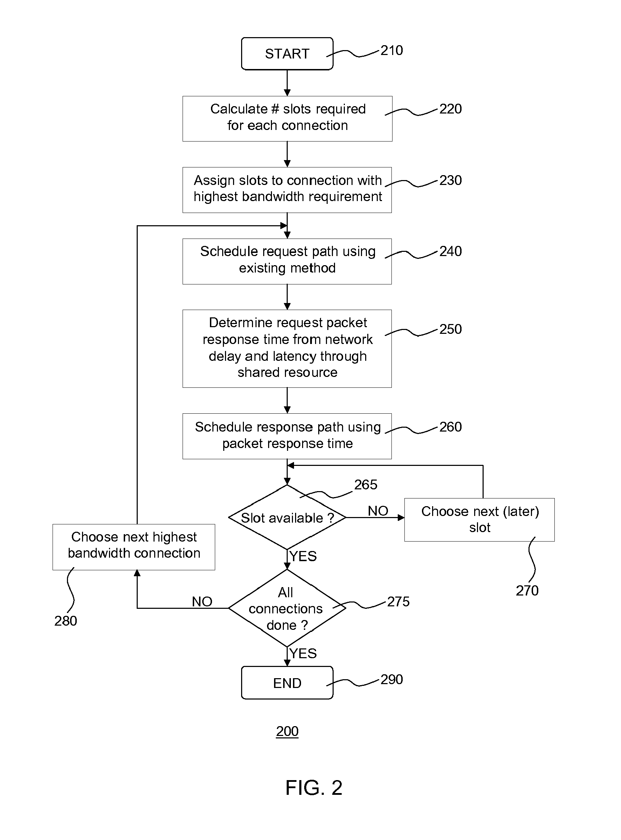

This problem is mitigated by the method of the present invention as follows. The schedule 100 is filled in accordance with the scheduling method of the present invention, an embodiment of which is shown in FIG. 2.

The method starts in step 210, after which in step 220 for each connection the number of slots is calculated that should be assigned to the connection in the slot tables 120 and 130. This may be done in any suitable way. In an embodiment, which is a non-limiting example only, the number of slots is expressed as a fraction of the total available number of slots (N), both the fraction as well as N being expressed as a power of 2. Alternatively, the sum of the bandwidth requirements of the connections may be determined after which the number N is divided by this sum to determine the number of time slots per unit bandwidth that may be assigned to a connection, such that the number of available time slots for each connection can be found by multiplying the available number of time slots per unit bandwidth with its bandwidth requirements. The above example assigns all available slots to the connections, but alternative embodiments in which slots are left unassigned are also feasible, for instance to allow the assignment of additional traffic to the shared resource at a later stage, or because the shared resource is not the only resource to be shared over the network.

For example, in case of more than one target shared resource 340, the total traffic through a single shared router 310 or a single shared link between routers could be higher than the total traffic through any single target shared resource 340. Hence, if the slots at each target shared resource 340 are all completely consumed, then it may not be possible to find a valid schedule that avoids collisions in the shared routers and links, as no bandwidth has been left available for the remaining shared resources. In such situations, the following method, which again is given by way of non-limiting example only, may be used:
a) Determine the total bandwidth required for a connection, counting data transfers, command transfers, and response information, as well as all packet header overhead;
b) Determine the transfer rate, which is the number of bytes that can be transferred in each clock cycle based on the bit-width of the links;
c) Calculate the maximum achievable bandwidth in a link by multiplying the clock frequency (cycles/second) by the transfer rate (bytes/cycle) to get link bandwidth in bytes/second;
d) Calculate the maximum achievable bandwidth in one slot by dividing the link bandwidth value by the total number of slots, getting bandwidth per slot in bytes/second/slot;
e) divide the total bandwidth required for a connection (from step a above) by the bandwidth per slot (from step d above) to get a number of slots: A (bytes/second) / D (bytes/second/slot) = E slots.
f) Round this number up to at least the next higher integer, but possibly to the next power of two if desired, to ensure that the number of slots exceeds the minimum required number.

### Other alternative embodiments will be apparent to the skilled person.

In step 230, the method selects the connection with the highest bandwidth requirements, and starts assigning time slots to this connection. In step 240, the request time slots of time slot table 120 may be filled as previously described, e.g. for a connection (initiator 1) requiring a quarter of all available time slots 110, finding the first available time slot starting from time slot 0 and equidistantly assigning subsequent time slots to this connection. This is shown in FIG. 1, where in slot table 120, initiator 1 is assigned slots 0, 4, 8, ..., N-3 for its access requests to the shared resource.

Next, in step 250, the method determines the expected latency between the initiator sending its access request, e.g. a write or read request packet, to the shared resource and the shared resource providing the initiator with its response, e.g. a response packet. This may for instance be achieved by means of simulation, e.g. by a designer using a simulation tool to estimate the expected latency, or during calibration of the NoC in which such latency is measured prior to producing the communication schedule 100.

The step 250 may comprise two sub-steps that are not explicitly shown; a first sub-step in which the delay of the network is estimated and a second sub-step in which the latency of the shared resource is estimated, after which the two estimates are combined to produce an estimate of the overall latency to be experienced between sending the access request and receiving the response from the shared resource. This overall latency will also be referred to as the packet response time.

In the next step 260, the packet response time will be used to assign time slots to the selected connection (e.g. Initiator 1) in the response time slot table 130 by adding the packet response time (in time slots) to the first time slot assigned in the time slot table 120, i.e. time slot 0. For example, let us assume that the packet response time for initiator 1 is three time slots, such that the method 200 will try to assign the response connection to time slot 0+3= time slot 3 in the response table 130. It is checked in step 265 if this time slot is still available, i.e. has not previously been assigned to another connection. If the time slot is available, as is the case in the present example, the response connection will be assigned to this time slot. Hence, as shown in FIG. 1, initiator 1 will be assigned time slot 3 in the response time slot table 130, and all subsequent available equidistant time slots, i.e. time slots 7, 11, ...,N-1.

However, if the preferred response time slot is not available, the method proceeds to step 270 to choose the next available time slot in the response time table 130. Essentially, only later time slots are considered contrary to the previously discussed known algorithm, which considers neighboring time slots, i.e. both earlier and later time slots. However, if the method of the present invention would also consider an earlier time slot, the delay between the time slot assigned to the access request, if pending, and the time slot assigned to the response, if pending, could become less than the packet response time. In other words, the method of the present invention, when assigning response packets, will only consider time slots for which the delay with an assigned time slot in the access time slot table 120 is at least the packet response time, thus ensuring that the response packet communication experiences a minimal delay compared to the request packet communication.

Upon scheduling the response communications of the selected connection, the method checks in step 275 if all connections have been scheduled. If this is the case, the method terminates in step 290. Otherwise, the method proceeds to step 280 in which the connection having the next highest bandwidth requirement is selected, after which the method returns to step 240 to schedule the selected connections as previously discussed.

At this point, it is noted that different connections may have different packet response times due to different network delays, with the method calculating in step 250 the packet response time for each individual connection. This is also shown in FIG. 1, in which the connection of initiators 2 and 3 each have a bandwidth requirement of 1/8 of the total available bandwidth, with the connection of initiator 2 having an estimated packet response time of three time slots and the initiator 3 having an estimated packet response time of four time slots.

Upon scheduling the access to the shared resource for initiator 2 as previously explained, the request time slots in table 120 will be 1, 9, ... N-7. When considering the first available time slot in the response time slot table 130, a minimum of three time slots, i.e. the packet response time of the connection between Initiator 2 and the shared resource is added to these time slots when assigning time slots in the response time slot table 130. Hence, in step 265, it is checked if time slot 1 +3 = 4 is available, which it is, such that time slots 4, 12, ...., N-4 are assigned to Initiator 2 in table 130.

Upon scheduling the access to the shared resource for initiator 3, the first available time slot may be identified using the previously explained nearest neighbor technique. This yields slot N-1 in table 120 as the first available time slot. Upon scheduling a response time slot in table 130, the shared resource is added to this time slot In step 265, it is checked if time slot (N-1)+4 = 3 is available, because the packet response time of Initiator 3 is four time slots. In this case, this time slot has already been assigned to Initiator 1 such that the method selects the next later time slot in step 270, which is time slot 4 in table 130. Again, step 265 checks if this time slot is available; however this time slot has already been assigned to Initiator 2. The method thus yet again proceeds to step 270, in which the next later time slot, i.e. time slot 5 is selected, which availability is confirmed in step 265 and subsequently assigned to Initiator 3. The method repeats this procedure until all connections have been assigned time slots in the TDMA schedule 100.

At this point, it is noted that several alternative embodiments of the method 200 may be contemplated. For instance, the algorithm used for assigning the first available time slot for a connection may be the same as the algorithm used for assigning the second time slot, i.e. the algorithm that only considers later time slots in case of the unavailability of the initially considered time slot.

Also, in an alternative embodiment, the packet response times of all connections may be estimated or measured to identify the worst-case packet response time prior to assigning time slots to the first connection. In this embodiment, in step 250, the worst-case packet response time may be used for all connections, which simplifies the method as only the time slots in the time slot table 120 need to be assigned, after which the time slot table 130 can be generated by simply shifting the time slots of the time slot table 120 by the worst-case packet response time.

The method of the present invention may be implemented in a computer program product that, when executed on a processor of a computer, executes the aforementioned steps of the method. Such a computer program product is particularly useful for designers of NoCs as it aids in providing NoCs having reduced latency compared to known NoCs. The method of the present invention may be implemented using routine skill only such that such an implementation is not discussed further for the sake of brevity only.

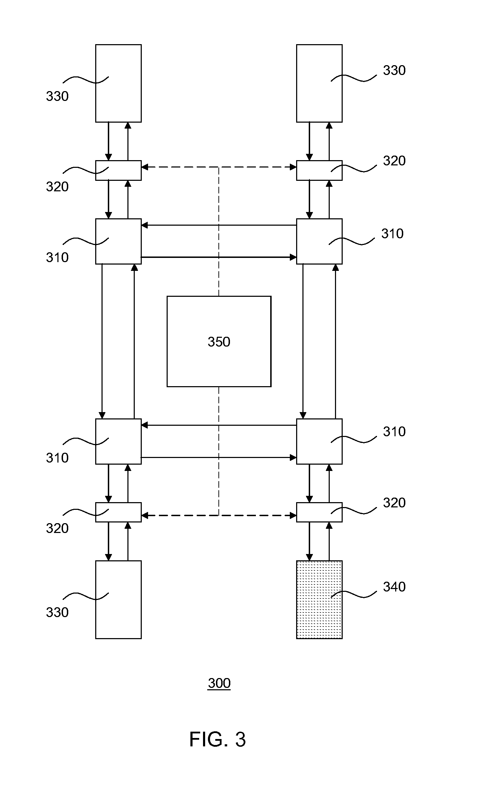

FIG. 3 shows a NoC 300 having initiators 330 that are connected to the network routers 310 via network interfaces 320. In addition, a shared resource 340 is connected to a network router 310 via a network interface 320. The network interface 320 of the shared resource 340 typically comprises the TDMA schedule 100 as generated by the method of the present invention. In an embodiment, the NoC 300 may also comprise a controller 350 that is configured to load a selected TDMA schedule 100 onto the relevant network interfaces 320 in response to an external signal, e.g. a user-induced signal. This may for instance occur upon the NoC 300 switching between use cases. Such different TDMA schedules are typically generated at the design stage of the NoC 300.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A method (200) of scheduling communications over a network (300) comprising a plurality of connections to a shared resource (340), comprising:
defining a communication schedule (100) comprising a total number of time slots (110) for granting a connection periodical access to the shared resource; and, for each connection:
assigning a first available time slot (110) in the communication schedule; and
assigning a second available time slot (110) in the communication schedule having a minimal delay with respect to the first time slot (110), said minimal delay being at least the expected combined latency of the network (300) and the shared resource (340) for responding to a request for said shared resource by the connection.

2. The method (200) of claim 1, wherein the first time slot (120) is assigned to an access request to the shared resource (340) from the selected connection and the second time slot (130) is assigned to a response from the shared resource to said request.

3. The method (200) of claim 1, wherein each connection has a specified bandwidth requirement, the method further comprising:
determining the sum of the specified bandwidth requirements of said connections;
dividing the number of time slots (110) by said sum to determine the number of time slots available per unit bandwidth in the communication schedule;
selecting the connection having the highest bandwidth requirement;
determining the number of time slots (110) available to said connection by multiplying the number of time slots available per unit bandwidth with the bandwidth requirement of said connection;
repeating the steps of assigning the first available time slot and the second available time slot for said selected connection until all time slots available to said connection have been assigned.

4. The method (200) of claim 3, wherein subsequently assigned first available time slots (110) are spaced apart by approximately the total number of time slots divided by the number of time slots available to said connection.

5. The method (200) of claim 3 or 4, repeating the steps of:
selecting the connection having the next highest bandwidth requirement;
determining the number of time slots (110) available to said connection by multiplying the number of time slots available per unit bandwidth with the bandwidth requirement of said connection; and
repeating the steps of assigning the first available time slot and the second available time slot for said selected connection until all time slots available to said connection have been assigned until said steps have been performed for all connections.

6. The method (200) of claim 1, wherein:
each connection comprises a first channel for communicating data to the shared resource and a second channel for receiving data from the shared resource;
the communication schedule comprises a first time slot table (120) for the first channels and a second time slot table (130) for the second channels;
the step of assigning the first available time slot (110) comprises assigning the first available time slot (110) to the first time slot table (120); and
the step of assigning the second available time slot (110) comprises assigning the second available time slot to the second time slot table (130).

7. The method (200) of claim 6, wherein:
each of said first channels comprises at least one network interface (320) comprising the first time slot table (120); and
each of said second channels comprises at least one network interface (320) comprising the second time slot table (130).

8. The method (200) of claim 1, further comprising the step (250) of estimating said minimal delay prior to assigning the second time slot.

9. The method (200) of claim 1, further comprising the step (250) of measuring said minimal delay prior to assigning the second time slot.

10. The method of claim 1, further comprising:
determining the total bandwidth requirement for the connection;
determining the maximum available bandwidth for a time slot; and
determining the number of time slots to be assigned to the connection from its total bandwidth requirement and the maximum available bandwidth for a time slot.

11. A computer program product for, if executed on a processor of a computer, implementing the steps of the method (200) of any of claims 1-10.

12. A network-on-chip (300) comprising a plurality of connections to a shared resource (340), the network-on-chip further comprising a first communication schedule (100) for the shared resource, said first communication schedule comprising a plurality of time slots (110) assigned to the respective connections, wherein for said connections, the delay between a first assigned time slot and a second assigned time slot is a minimal delay, said minimal delay being at least the expected combined latency of the network (300) and the shared resource (340) for responding to a request for said shared resource by the connection.

13. The network-on-chip (300) of claim 12, further comprising a scheduler (350) comprising a plurality of communication schedules including the first communication schedule (100), said scheduler being adapted to program the network (300) with one of said communication schedules in response to a control signal.

14. The network-on-chip (300) of claim 13, wherein the control signal is generated by the user of the network-on-chip.
